# EUROPÄISCHE PATENTANMELDUNG

(11) **EP 4 166 619 A1**
(43) Veröffentlichungstag der Anmeldung: **19.04.2023**
(21) Anmeldenummer: 22200794.0
(22) Anmeldetag: 11.10.2022
(51) Int. Cl.: C09J 7/20

(54) **KLEBEBAND UND VERFAHREN ZUM UMMANTELN VON LANGGESTRECKTEM GUT INSBESONDERE LEITUNGEN**

(30) Priorität: 13.10.2021 DE 102021126466
(71) Anmelder: tesa SE, 22848 Norderstedt (DE)
(72) Erfinder: KLINGEBERG, Kerstin, 22527 Hamburg (DE); KIRPICENOK, Olga, 20099 Hamburg (DE); GRAEF, Hans-Peter, 224453 Hamburg (DE); WEGENER, Dr. Philipp, 21614 Buxtehude (DE); BIR, Dr. Gerhard, verstorben (DE)
(74) Vertreter: tesa SE

(57) **Zusammenfassung**

Die Erfindung betrifft ein Klebeband zum Ummanteln von langgestrecktem Gut wie insbesondere Leitungen oder Kabelsätze, umfassend einen bandförmigen Träger, der auf mindestens einer Seite mit einer härtbaren Klebemasse versehen ist, dadurch gekennzeichnet, dass das Klebeband des Weiteren auf einer Seite des bandförmigen Trägers mit einer Releaseschicht aus Carbamat versehen ist.

## Beschreibung

Die Erfindung betrifft ein Klebeband zum Ummanteln von langgestrecktem Gut wie insbesondere Leitungen oder Kabelsätze, umfassend einen bandförmigen Träger, das auf mindestens einer Seite mit einer härtbaren Klebemasse versehen ist, und ein Verfahren zum Ummanteln von langgestrecktem Gut, insbesondere Kabelsätzen.

Seit geraumer Zeit werden in der Industrie Klebebänder zur Herstellung von Kabelbäumen verwendet. Die Klebebänder werden zum Bündeln einer Vielzahl von elektrischen Leitungen vor dem Einbau oder in bereits montiertem Zustand eingesetzt, um beispielsweise den Raumbedarf des Leitungsbündels durch Bandagieren zu reduzieren und zusätzlich Schutzfunktionen wie Schutz gegen mechanische und/oder thermische Beanspruchung zu erreichen. Gängige Formen von Klebebändern umfassen Folien- oder Textilträger, die in der Regel einseitig mit Haftklebemassen beschichtet sind. Klebebänder zum Ummanteln von langgestreckten Gütern sind beispielsweise aus der DE 10 2013 213 726 A1, der EP 1 848 006 A2 und der EP 2 497 805 A1 bekannt.

Derzeitige mit Klebeband umwickelte Kabelstränge sind in der Regel flexibel. Dies ist jedoch aus fertigungstechnischen Gründen oft unerwünscht. In der Fertigung werden die Kabelstränge in der Regel zu einem Kabelplan vorgefertigt und dann in das zu bestückende Objekt wie beispielsweise ein Automobil eingesetzt. Ein Kabelsatzplan entspricht der tatsächlichen räumlichen Anordnung der einzelnen Kabelstränge in dem Kabelsatz, zeigt also welcher Kabelstrang an welcher Stelle in welchem Winkel gebogen ist, wo sich Positionen von Abzweigen oder Ausbindungen befinden und mit welchen Steckern die Enden der Kabelstränge belegt sind.

Um die einzelnen Stränge des Kabelsatzes in einer bestimmten Form zu halten, so dass sie zum Beispiel im Motorraum um den Motor herumgeführt werden können, ohne mit dem Motor in Kontakt zu kommen, werden um den mit Klebeband umwickelten Kabelbaum üblicherweise nachträglich Spritzgussteile angebracht. Diese Spritzgussteile haben aber den Nachteil, dass ein zusätzlicher Material- und Montageaufwand anfällt.

In den Veröffentlichungen DE 10 2019 211 178 A1, DE 10 2019 210 708 A1 oder DE 10 2019 206 929 A1 wird ein Verfahren zum Ummanteln von langgestrecktem Gut wie insbesondere Leitungen oder Kabelsätzen offenbart, bei dem das langgestreckte Gut mit einem Klebeband mit darauf aufgebrachter aushärtbarer Klebemasse in einer Schraubenlinie oder in axialer Richtung umhüllt wird und die auf dem Klebeband aufgebrachte Klebemasse aktiviert und ausgehärtet wird.

Bei der Herstellung von Kabelbäumen für die Automobilindustrie werden standardmäßig Klebebänder eingesetzt, die weder ein Trennpapier/Liner, noch eine Releaseschicht aufweisen. Solche Klebebänder dürfen eine gewisse Klebkraft auf der eigenen Rückseite nicht überschreiten, da sonst ein Abrollen der Klebebandrolle nur noch unter großem Kraftaufwand oder gar nicht mehr möglich wäre. Die Klebkraft darf also einen bestimmten Wert nicht überschreiten. Auf der anderen Seite geht damit jedoch häufig auch eine geringe Klebkraft auf den Kabelisolierungen sowie weiteren Bestandteilen des Kabelbaums (Rillrohre, Schrumpfschläuche, Steckverbindungen), auf denen aber eine hohe Klebkraft erforderlich ist, einher. Denn eine geringe Klebkraft kann dazu führen, dass die Verbindung zwischen Klebeband und Kalbeisolierung beziehungsweise den erwähnten anderen Bestandteilen bricht, was dazu führt, dass der Kabelbaum weiterhin nicht durch das Klebeband geschützt ist. Des Weiteren besteht ein Bedarf an höheren Klebkräften bei Anwendungen mit erhöhten Anforderungen (erhöhte Temperatur-, Vibrations-, Abrasionsbelastung), um die exakte Positionierung des Klebebands, auch über die Lebensdauer eines Fahrzeuges hinweg, zu garantieren.

Um ein Kabelwickelband mit erhöhter Klebkraft, aber ohne, in der Verarbeitung, störendes Trennpapier/Liner zu erhalten, muss auf eine Releaseschicht zurückgegriffen werden, um ein Abwickeln der Rolle gewährleisten zu können. Daher wird auf das mit Klebmasse getränkte Trägervlies eine Trennschicht aufgebracht., um die Haftung des Klebebands auf sich selbst zu verringern. Da ein Kabelwickelband jedoch nicht nur auf die Kabelisolierungen oder weitere Bestandteile des Kabelbaums aufgebracht wird, sondern aufgrund der überlappenden Wickelung auch "auf sich selbst" beziehungsweise auf der eigenen Klebebandrückseite appliziert wird, führt ein Release zu einer Absenkung der Klebkraft auf der Rückseite des Klebebands, was zu einer Absenkung der Verbundfestigkeit und zu einer Ablösung der Lagen in der Anwendung führen kann.

Es besteht also auf der einen Seite das Erfordernis einer hinreichend geringen Klebkraft zwischen Klebeschicht und eigener Rückseite des Kabelwickelbandes, um die Abrollbarkeit zu gewährleisten, auf der anderen Seite muss die Klebkraft zwischen Klebeschicht und eigener Rückseite des Kabelwickelbandes nach erfolgter Applikation möglichst groß sein, um zu gewährleisten, dass das Klebeband bei überlappendender Anordnung sicher und gut auf sich selbst haftet. Dies scheint ein nicht zu lösender Widerspruch zu sein, denn die Klebmasse kann nicht "wissen", wann sie weniger gut und wann sie sehr gut haften soll.

Aufgabe der vorliegenden Erfindung ist es daher ein Klebeband zum Ummanteln von langgestrecktem Gut zur Verfügung zu stellen, das die oben beschriebenen Nachteile beseitigt und die vorstehend beschriebenen Anforderungen erfüllt, also den Widerspruch auflöst, zum einen auf sich selbst nur so stark zu haften, dass es sich noch leicht abrollen lässt, zum anderen nach erfolgter Applikation so stark zu haften, dass kein Ablösen mehr erfolgt. Aufgabe der vorliegenden Erfindung ist es auch, ein Verfahren zum Ummanteln von langgestrecktem Gut sowie ein mit dem Verfahren erhältliches Produkt zur Verfügung zu stellen.

Gelöst wird diese Aufgabe durch ein Klebeband, wie es im unabhängigen Anspruch beschrieben ist. Gegenstand der Unteransprüche sind vorteilhafte Fortbildungen des Erfindungsgegenstandes. Des Weiteren umfasst die Erfindung ein Verfahren zum Ummanteln von langgestreckten Gut mit dem Klebeband sowie ein mit dem Verfahren erhältliches Produkt.

Demgemäß betrifft die Erfindung ein Klebeband der eingangs genannten Art, bei dem das Klebeband des Weiteren auf einer Seite des bandförmigen Trägers mit einer Releaseschicht, die auch als Trennschicht bezeichnet wird, aus Carbamat versehen ist.

Carbamate sind Salze und Ester der Carbamidsäuren (R₂N-COOH). In Lösung sind Carbamate gute Releasesubstanzen für Polyolefine und für mit Klebemasse auf Naturkautschuk-, Synthesekautschuk- oder Acrylatbasis beschichtete Substrate mit niedrigem Schmelzpunkt wie PE, PP, PVC, PET. Als vorteilhaft haben sich Carbamate gezeigt, die aus Polyvinylacetat und Stearylisocyanat hergestellt werden. Hergestellt wird das Polyvinylstearylcarbamat durch die partielle Verseifung von Polyvinylacetat und der anschließenden Umsetzung mit Stearylisocyanat. Für die Herstellung von Polyvinylalkohol wird das Polyvinylacetat hydrolisiert, so dass Acetatgruppen durch Hydroxylgruppen ersetzt werden. Dieser Umsatz gelingt allerdings nicht vollständig, so dass weiterhin Acetatgruppen vorliegen. Die Reaktion mit Isocyanat führt zu einem Austausch der Hydroxylgruppen durch Carbamatgruppen, die sich als lange Seitenketten an die Kohlenstoffatome binden. Die Herstellung von als Klebeband geeigneter Carbamate ist der US 2,532,011 A zu entnehmen.

Je nach Einsatz von Estern beziehungsweise Alkoholen und Isocyanaten, entstehen unterschiedliche Carbamate mit verschieden langen Haupt- und Seitenketten, was eine Einfluss auf den Schmelzpunkt und Kristallinitätsgrad hat. Neben den Einsatzmaterialien ergeben sich aus der Reinheit des Polymers, sowie des Grades der Substitution die unterschiedlichen Schmelzpunkte der Carbamate und somit deren Temperaturbeständigkeit. Wird für die Umsetzung reines Isocyanat verwendet ist der Schmelzpunkt höher, als wenn eine weniger reine Qualität zum Einsatz kommt. Enthält das Isocyanat andere Fettsäuren als Verunreinigungen, ist der Schmelzpunkt herabgesetzt.

Carbamate unterliegen bei Wärmezufuhr einem Umkristallisierungsvorgang, der bewirkt, dass die Orientierung des Carbamats aufgelöst und damit die Releasewirkung der Carbamatschicht herabgesetzt beziehungsweise sogar außer Kraft gesetzt wird. Dieser Effekt kann zur Lösung der oben genannten Aufgabenstellung genutzt werden. Dabei wird ein Carbamat so ausgewählt, dass der Umkristallinisierungsvorgang in einem Temperaturbereich liegt, der weit genug entfernt von der Applikationstemperatur (Verwendung des Klebebands) und möglichst nahe an der Temperatur des Aushärteprozesses ist. Im Bereich der Aushärtetemperatur wird durch die Wärmezufuhr der hohe Ordnungsgrad, hervorgerufen durch die Kristallisation der Stearylseitenketten, aufgelöst, wodurch die Releasewirkung abnimmt. Dadurch kann sich die Klebemasse mit dem unter der Carbamatschicht befindlichen Trägermaterial verbinden, womit die Haftung der Klebemasseschicht auf dem Trägermaterial zunimmt.

Es wird somit erreicht, dass die Klebemasseschicht zunächst ausreichend wenig auf der Trägerschicht haftet, so dass das Klebeband aus dem auf sich selbst aufgewickelten Zustand einfach appliziert werden kann. Nach erfolgter Applikation wird durch Wärmeeintrag ein Umkristallisationsvorgang initiiert, der zum Ergebnis hat, dass die Releasewirkung der Releaseschicht nachlässt, wodurch die Haftung des Klebebandes auf sich selbst, genauer auf seiner eigenen Rückseite, erhöht wird. Die Verbundfestigkeit der Lagen und die geforderte Festigkeit im fertigen Produkt sind somit sichergestellt.

Die Releasewirkung des Carbamats ist somit temperaturreversibel; sie kann durch Wärmeeinwirkung deaktiviert werden.

Die für die Anwendung als Kabelwickelwand, insbesondere in der Automobilindustrie benötigte, gegenüber herkömmlichen Klebebändern erhöhte Klebkraft der Klebemasse, kann somit sichergestellt werden und erhalten bleiben, während gleichzeitig dafür gesorgt ist, dass eine den Anforderungen entsprechende Handhabbarkeit des Klebebandes gewährleistet ist. So ist insbesondere eine Applikation mit einem Applikator in Form eines Rollenspenders durch einfaches Abrollen möglich, ohne dass hier durch den Anwender übermäßiger Krafteinsatz erforderlich wäre.

Die Temperatur, die benötigt wird, um die Carbamatwirkung außer Kraft zu setzen, also den Umkristallisationsprozess des Carbamats in Gang zu setzen, hängt vom eingesetzten Carbamat-Typ ab. Die Temperatur liegt üblicherweise im Bereich der Schmelztemperatur des Carbamats. Je höher die Temperatur gewählt wird, umso schneller läuft der Prozess ab. Welches Carbamat vorzugsweise zum Einsatz kommt, hängt von der jeweiligen Anwendung ab. Kabelstränge im Fahrzeuginnenraum sind weniger hohen Maximaltemperaturen ausgesetzt als solche im Motorraum. Entsprechend ist die Kabelisolierung im Fahrzeuginnenraum üblicherweise eine andere als im Motorraum. Im Fahrzeuginnenraum kommt - insbesondere aufgrund des Preises - standardmäßig Polyvinylchlorid (PVC) für die Kabelummantelung zum Einsatz. PVC ist nicht besonders wärmestabil. Folglich muss die Umkristallisationstemperatur und entsprechend die Schmelztemperatur in einem Bereich liegen, der für das PVC unkritisch ist. Übliche Temperaturen, auf die erwärmt wird, beginnen bei 80 °C, vorzugsweise liegen sie für Carbamate, die auf Kabelwickelbändern für den Innenbereich eingesetzt werden, im Bereich von 110 °C bis 140 °C.

Im Motorraum müssen Kabel bis 175 °C temperaturstabil sein. Übliche Temperaturen im Motorraum liegen bei 150 °C. Hier kommen als Isolierungen zumeist fluorierte Kohlenwasserstoffe wie Ethylen-Tetrafluorethylen-Copolymere (ETFE) zum Einsatz. Entsprechend höher können auch die Temperaturen sein, die für die Umkristallisationen verwendet werden. Damit kann die Zeit, die für die Umkristallisation und damit für die Herabsetzung der Releasewirkung erforderlich ist, verringert werden.

Vorzugsweise ist das erfindungsgemäße Klebeband derart aufgebaut, dass es auf einer Seite des bandförmigen Trägers mit einer härtbaren Klebemasse und auf der anderen Seite mit der Releaseschicht aus Carbamat versehen ist. Das Klebeband besteht dann aus drei Schichten in der Abfolge Klebemasse - Träger - Carbamatschicht. Die Trägerschicht kann dabei auch aus mehreren Schichten bestehen. Die Klebemasse ist regelmäßig auf einen Textil- oder Vliesstoff aufgetragen. Die Klebemasse dringt in diese Textil- oder Vliesschicht ein und durchtränkt sie. Auf der der Klebemasse abgewandten Seite weist die Textil- oder Vliesschicht häufig noch eine Folienschicht auf, die als Barriereschicht wirkt, damit die Klebemasse auf einer Seite des Trägers verbleibt.

Die härtbare Klebemasse wird insbesondere mittels Strahlungsenergie, Wärmeenergie, Feuchtigkeit oder Druck aktiviert. Dabei ist eine Aktivierung mittels Wärmeenergie besonders bevorzugt. Da für die Änderung der Orientierung des Carbamats zur Herabsetzung der Releasewirkung ebenfalls ein Wärmeeintrag erforderlich ist, können durch Aktivierung der Klebemasse mit Wärmeenergie beide Prozesse auf einmal initiiert werden, das heißt, sowohl die Aktivierung der Klebemasse wie auch die Herabsetzung der Releasewirkung oder "Deaktivierung" der Releaseschicht. Es kann aber auch vorteilhaft sein, eine andere Form der Aktivierung für die Klebemasse zu wählen. Wenn beispielsweise eine Aktivierung mittels UV-Strahlung erfolgt, ist es möglich zusätzlich noch eine IR-Lampe zum Einsatz zu bringen, um mittels IR-Strahlung die für die Herabsetzung der Releasewirkung erforderliche Wärme in das System einzubringen.

Carbamate sind Salze und Ester der Carbamidsäure. Auch Polyurethane gehören zu den Carbamaten. Diese sind für die vorliegende Erfindung besonders geeignet, da sie Schmelzpunkte aufweisen, die die Temperaturanforderungen der erfindungsgemäßen Releaseschicht erfüllen.

In einer besonders bevorzugten Ausführungsform ist die härtbare Klebemasse haftklebrig. Mit anderen Worten kann als Klebemasse ein Haftklebemasse zum Einsatz kommen, die härtbar ist. Dies ist insbesondere dadurch erreichbar, , dass der Haftklebemasse zur Vernetzung befähigten Verbindungen zugesetzt werden, sogenannte Vernetzer. Wie hier verwendet, steht der Begriff Vernetzer für chemische Verbindungen, die imstande sind, Molekülketten miteinander zu verbinden, damit sich aus den zweidimensionalen Strukturen über Ausbildung intermolekularer Brücken dreidimensional-vernetzte Strukturen bilden können. Vernetzer sind solche - insbesondere bi- oder polyfunktionelle, meist niedermolekulare - Verbindungen, die unter den gewählten Vernetzungsbedingungen mit geeigneten - insbesondere funktionellen - Gruppen der zu vernetzenden Polymere reagieren können, somit zwei oder mehrere Polymere oder Polymerstellen miteinander verknüpfen ("Brücken" bilden) und somit ein Netzwerk aus dem zu vernetzenden Polymer beziehungsweise den zu vernetzenden Polymeren schaffen. Hierdurch kommt es in der Regel zur Kohäsionserhöhung. Typische Beispiele für Vernetzer sind chemische Verbindungen, die innerhalb des Moleküls oder an den beiden Molekülenden zwei oder mehr gleiche oder unterschiedliche funktionelle Gruppen aufweisen und folglich Moleküle gleicher oder auch unterschiedlicher Strukturen miteinander vernetzen können. Außerdem kann ein Vernetzer mit dem reaktiven Monomer oder Reaktivharz reagieren, ohne dass es dabei zu einer Polymerisation im eigentlichen Sinne kommt.

Erfindungsgemäß wird als härtbare Klebemasse eine Strukturklebemasse (Konstruktionsklebstoff, Montageklebstoff) verwendet (siehe Römpp, Georg Thieme Verlag, Dokumentkennung RD-19-04489, letzte Aktualisierung: September 2012). Nach DIN EN 923: 2006-01 sind Strukturklebstoffe Klebstoffe, die Klebverbindungen bilden, die in einem Gefüge für eine vorgegebene längere Zeitspanne eine festgelegte Festigkeit beibehalten können (nach ASTM-Definition: *"bonding agents used for transferring required loads between adherends exposed to Service environments typical for the structure involved"*)*.* Es sind also Klebstoffe für chemische und physikalisch hoch beanspruchbare Klebungen, die im ausgehärteten Zustand zur Verfestigung der geklebten Substrate beitragen und zur Herstellung von Konstruktionen aus Metallen, Keramik, Beton, Holz oder verstärkten Kunststoffen verwendet werden. Die erfindungsgemäßen Strukturklebstoffe basieren insbesondere auf Reaktionsklebstoffen (Phenolharze, Epoxidharze, Polyimide, Polyurethane und andere).

Zur Lösung der technischen Probleme wird gemäß einer bevorzugten Ausführungsform der Erfindung ein Klebeband zum Ummanteln von langgestrecktem Gut vorgeschlagen, umfassend einen bandförmigen Träger, der auf mindestens einer Seite mit einer Klebeschicht versehen ist, wobei die Klebeschicht eine UV-härtbare Zusammensetzung umfasst, enthaltend bezogen auf das Gesamtgewicht der Zusammensetzung:

| | |
|---|---|
| 15 bis 50 Gew.-% | Matrix |
| 49,9 bis 82 Gew.-% | Epoxidharz |
| 0,1 bis 3 Gew.-% | Photoinitiator |

wobei das Matrixpolymer einen selbsttragenden Film bildet, in dem Epoxidharz und Photoinitiator eingebettet sind.

Das erfindungsgemäße Klebeband enthält in der einfachsten Variante als klebende Schicht eine Monoschicht aus der die UV-härtbaren Zusammensetzung.

In einer anderen Variante ist ein mehrschichtiger Aufbau der klebenden Schicht vorgesehen. Neben der Schicht aus der UV-härtbaren Zusammensetzung ist eine weitere Schicht aus einer Haftklebemasse vorgesehen, vorzugsweise außen liegend.

In einer weiteren Variante weist die klebende Schicht eine Mischung aus der UV-härtbaren Zusammensetzung und einem selbstklebenden Haftklebstoff auf.

Bevorzugt ist das Matrixpolymer ausgewählt aus der Gruppe bestehend aus StyrolCopolymeren, Acrylat-Copolymeren, Methacrylat-Copolymeren, thermoplastischen Polyurethanen, Copolyestern, Copolyamiden und Ethylen-Vinylacetat-Copolymeren und Mischungen derselben.

Als Epoxidharz(e) der UV-härtbaren Zusammensetzung kann ein einziges Epoxidharz oder eine Mischung von Epoxidharzen ein-gesetzt werden. Grundsätzlich können bei Raumtemperatur flüssige Epoxidharze oder bei Raumtemperatur feste Epoxid-harze oder Mischungen hiervon eingesetzt werden.

Beispiele, ohne sich einschränken zu wollen, sind 3,4-Epoxycyclohexylmethyl-3',4'-epoxycyclohexancarboxylat (EEC) und Derivate, Dicyclopendadiendioxid und Derivate, 3-Ethyl-3-oxetanmethanol und Derivate, Tetrahydrophthalsäuredigly-cidyl-ester und Derivate, Hexahydrophthalsäurediglycidyles-ter und Derivate, 1,2-Ethandiglycidylether und Derivate, 1,3-Propandiglycidylether und Derivate, 1,4-Butandioldiglycidyl-ether und Derivate, höhere 1,n-Alkandiglycidylether und Derivate, Bis-[(3,4-epoxycyclohexyl)methyl]adipat und Derivate, Vinylcyclohexyl-dioxid und Derivate, 1,4-Cyclohexandimethanol-bis-(3,4-epoxycyclohexancarboxylat) und Derivate, 4,5-Epoxytetrahydrophthalsäurediglycidylester und Derivate, Bis-[1-ethyl(3-oxetanyl)methyl)ether und Derivate, Pentaery-thritoltetraglycidylether und Derivate, Bisphenol-A-Digylcidylether (DGEBA), hydriertes Bisphenol-A-Diglycidyl-ether, Bisphenol-F-Diglycidylether, hydriertes Bisphenol-F-Diglycidylether, Epoxyphenol-Novolaks, hydrierte Epoxy-phenol-Novolak, Epoxycresol-Novolaks, hydrierte Epoxycresol-Novolaks, 2-(7-Oxabicyclo[4.1.0]hept-3-yl)spiro[1,3-dioxane-5,3'-[7]oxabicyclo[4.1.0]-heptane], 1,4-Bis((2,3-epoxypropoxy)-methyl)cyclohexane.

Reaktivharze können in ihrer monomeren oder auch dimeren, trimeren usw. bis hin zu ihrer oligomeren Form eingesetzt werden.

Vorzugsweise ist das eine Epoxidharz oder mindestens eines der Epoxidharze ein Feststoff; insbesondere ein solcher mit einer Erweichungstemperatur von mindestens 45 °C oder ein solcher mit einer Viskosität bei 25 °C von mindestens 20 Pa*s, bevorzugt mindestens 50 Pa*s, insbesondere mindestens 150 Pa*s (bestimmt nach DIN 53019-1 bei 25 °C und einer von Schergeschwindigkeit 1 s⁻¹).

In einer bevorzugten Ausführung des erfindungsgemäßen Klebe-bandes umfassen die Epoxidharze eine Mischung von bei 25 °C flüssigen und bei 25 °C festen Epoxidharzen. Der Anteil der flüssigen Epoxidharze an den Epoxidharzen (E) liegt ins-besondere bei 10 bis 90 Gew.-%, weiter bevorzugt bei 20 bis 75 Gew.-%. Die jeweilige Differenz auf 100 Gew.-% der Epoxidharze ist dann durch feste Epoxidharze gegeben. Klebebänder mit solchen Verhältnissen aus flüssigen und festen Epoxid-Komponenten zeigen im unausgehärteten Zustand besonders ausgewogene Klebeigenschaften. Wird ein Klebeband mit besonders guten Auffließeigenschaften gewünscht, so ist der Anteil an flüssigen Epoxidkomponenten bevorzugt 50 bis 80 Gew.-%. Für Anwendungen, bei denen die Klebebänder bereits im unausgehärteten Zustand eine höhere Last tragen müssen, ist ein Anteil von 15 bis 45 Gew.-% besonders bevorzugt. Es kann ein solches Harz oder auch eine Mischung verschiedener Harze eingesetzt werden.

Weiter bevorzugt umfassen die Epoxidharze wenigstens zwei unterschiedliche Epoxidharze (E-1) und (E-2), von denen
a) das erste Epoxidharz (E-1) bei 25 °C eine dynamische Viskosität von weniger als 500 Pa*s aufweist, gemessen nach DIN 53019-1 bei einer Messtemperatur von 25 °C und einer Schergeschwindigkeit 1 s⁻¹, und
b) von denen das zweite Epoxidharz (E-2) eine Erweichungstemperatur von wenigstens 45 °C oder bei 25 °C eine dynamische Viskosität von wenigstens 1000 Pa*s aufweist, gemessen nach DIN 53019-1 bei einer Messtemperatur von 25 °C und einer Schergeschwindigkeit 1 s⁻¹,
wobei insbesondere der Anteil des ersten Epoxidharzes (E-1) 10 bis 90 Gew.-%, bevorzugt 20 bis 75 Gew.-% und der Anteil des zweiten Epoxidharzes (E-2) 10 bis 90 Gew.-%, bevorzugt 25 bis 80 Gew.-% beträgt, bezogen auf die Gesamtheit an Epoxidharzen. Vorteilhaft besteht die Epoxidharz-Komponente aus diesen beiden Epoxidharzen (E-1) und (E-2), so dass sich der Anteil der beiden Epoxidharze (E-1) und (E-2) am gesamten Epoxidharz zu 100 Gew.-% addieren.

Besonders gute Haftklebstoffe werden erhalten, wenn der Anteil von Epoxidharz (E2) im Bereich von 40 bis 80 Gew.-%, insbesondere 60 bis 75 Gew.-% ist. In einer speziellen Ausführungsform ist der Anteil an Epoxidharzen (E-2), die eine Erweichungstemperatur von wenigstens 45 °C haben, mindestens 35 Gew.-%, insbesondere im Bereich 40 bis 70 Gew.-%.

Die Kohäsion der unvernetzten Haftklebstoffe bei trotzdem ausreichender Haftklebrigkeit ist besonders gut, wenn der Anteil an Epoxidharzen mit einer Erweichungstemperatur von wenigstens 45 °C mindestens 15 Gew.-% beträgt, insbesondere im Bereich von 20 Gew.-% bis 75 Gew.-% liegt, bezogen auf das gesamte Epoxidharz. Das Auffließverhalten wird verbessert, wenn weniger als 55 Gew.-%, insbesondere zwischen 25 Gew.-% und 45 Gew.-% enthalten sind.

Die Klebmasseformulierung enthält zudem mindestens eine Sorte eines Photoinitiators für die kationische Härtung der Reaktivharze. Unter den Initiatoren für eine kationische UV-Härtung sind insbesondere Sulfonium, lodonium und Metallocen basierende Systeme einsetzbar.

Als Beispiele für Sulfonium basierende Kationen sei auf die Ausführungen in US 6,908,722 B1 (insbesondere Spalten 10 bis 21) verwiesen.

Als Beispiele für Anionen, die als Gegenionen für die oben genannten Kationen dienen, seien Tetrafluorborat, Tetraphenylborat, Hexafluorphosphat, Perchlorat, Tetrachlor-ferrat, Hexafluorarsenat, Hexafluorantimonat, Pentafluorhy-droxyantimonat, Hexachlorantimonat, Tetrakispentafluorphenylborat, Tetrakis(pentafluormethylphenyl)borat, Bi-(trifluor-methylsulfonyl)amid und Tris-(trifluormethylsulfonyl)methid genannt. Ferner sind insbesondere für Iodonium-basierende Initiatoren auch Chlorid, Bromid oder lodid als Anionen denkbar, wobei aber Initiatoren, die im Wesentlichen frei von Chlor und Brom sind, bevorzugt sind.
Beispielhaft zählen zu den einsetzbaren Systemen
Sulfonium-Salze (siehe zum Beispiel US 4,231,951 A, US 4,256,828 A, US 4,058,401 A, US 4,138,255 A und US 2010/063221 A1) wie
Triphenylsulfoniumhexafluoroarsenat,
Triphen-ylsulfoniumhexafluoroborat,
Triphenylsulfoniumtetra-fluoroborat,
Triphenylsulfoniumtetrakis-(pentafluorobenzyl)-borat,
Methyldiphenylsulfoniumtet-rafluoroborat,
Methyldiphenylsulfoniumtetrakis-(pentafluorobenzyl)-borat,
Dimethylphenylsulfoniumhex-afluorophosphat,
Triphenylsulfoniumhexafluorophosphat,
Triphenylsulfoniumhexafluoroantimonat,
Diphenylnaph-thylsulfoniumhexafluoroarsenat,
Tritolylsulfoniumhex-afluorophosphat,
Anisyldiphenylsulfoniumhexafluoroanti-monat,
4-Butoxyphenyldiphenylsulfoniumtetrafluoroborat,
4-Butoxyphenyldiphenylsulfoniumtetrakis-(pentafluorobenzyl)-borat,
4-Chlorophenyldiphenylsulfoniumhexafluoroantimonat,
Tris-(4-phenoxyphenyl)-sulfoniumhexafluorophosphat,
Di-(4-ethoxyphenyl)-methylsulfoniumhexafluoroarsenat,
4-Acetylphenyldiphenylsulfoniumtetrafluoroborat,
4-Acetylphenyldiphenylsulfoniumtetrakis-(pentafluorobenzyl)-borat,
Tris-(4-thiomethoxyphenyl)-sulfoniumhexafluorophosphat,
Di-(methoxysulfonylphenyl)-methylsulfoniumhexafluoroantimonat,
Di-(methoxynaphthyl)-methylsulfoniumtetrafluoroborat,
Di-(methoxynaphthyl)-methylsulfoniumtetrakis-(pentafluorobenzyl)-borat,
Di-(carbomethoxyphenyl)-methylsulfoniumhexafluorophosphat,
(4-Octyloxyphenyl)-diphenylsulfoniumtetrakis-(3,5-bis-trifluoromethylphenyl)-borat,
Tris-[4-(4-acetylphenyl)-thiophenyl]-sulfoniumtetrakis-(pentafluorophenyl)-borat,
Tris-(dodecylphenyl)-sulfoniumtetrakis-(3,5-bis-trifluoromethylphenyl)-borat,
4-Acetamidphenyldiphenylsulfoniumtetrafluoroborat,
4-Acetamidphenyldiphenylsulfoniumtetrakis-(pentafluorobenzyl)-borat,
Dimethylnaphthyl-sulfoniumhexafluorophosphat,
Trifluoromethyldiphen-ylsulfoniumtetrafluoroborat,
Trifluoromethyldiphen-ylsulfoniumtetrakis-(pentafluorobenzyl)-borat,
Phenyl-methylbenzylsulfoniumhexafluorophosphat,
5-Methylthianthreniumhexafluorophosphat,
10-Phenyl-9,9-dimethylthioxantheniumhexafluorophosphat,
10-Phenyl-9-oxothioxantheniumtetrafluoroborat,
10-Phenyl-9-oxothioxantheniumtetrakis-(pentafluorobenzyl)-borat,
5-Methyl-10-oxothianthreniumtetrafluoroborat,
5-Methyl-10-oxothianthreniumtetrakis-(pentafluorobenzyl)-borat und
5-Methyl-10,10-dioxothianthreniumhexafluorophosphat,
lodonium-Salze (siehe zum Beispiel US 3,729,313 A, US 3,741,769 A, US 4,250,053 A,
US 4,394,403 A und US 2010/063221 A1) wie
Diphenyliodoniumtetrafluoroborat,
Di-(4-methylphenyl)-iodoniumtetrafluoroborat,
Phenyl-4-methylphenyliodoniumtetrafluoroborat,
Di-(4-chlorphenyl)-iodoniumhexafluorophosphat,
Dinaphthyliodoniumtetrafluoroborat,
Di-(4-trifluormethylphenyl)-iodoniumtetrafluoroborat,
Diphenyliodoniumhexafluorophosphat,
Di-(4-methylphenyl)-iodoniumhexafluorophosphat, Diphe-nyliodoniumhexafluoroarsenat,
Di-(4-phenoxyphenyl)-iodoniumtetrafluoroborat,
Phenyl-2-thienyliodoniumhexafluorophosphat,
3,5-Dimethylpyrazolyl-4-phenyliodoniumhexafluorophosphat,
Diphenyliodoniumhexafluoroantimonat,
2,2'-Diphenyliodoniumtetrafluoroborat,
Di-(2,4-dichlorphenyl)-iodoniumhexafluorophosphat,
Di-(4-bromphenyl)-iodoniumhexafluorophosphat,
Di-(4-methoxyphenyl)-iodoniumhexafluorophosphat,
Di-(3-carboxyphenyl)-iodoniumhexafluorophosphat,
Di-(3-methoxycarbonylphenyl)-iodoniumhexafluorophosphat,
Di-(3-methoxysulfonylphenyl)-iodoniumhexafluorophosphat,
Di-(4-acetamidophenyl)-iodoniumhexafluorophosphat,
Di-(2-benzothienyl)-iodoniumhexafluorophosphat,
Diaryliodoniumtristrifluormethylsulfonylmethid wie
Diphenyliodoniumhexafluoroantimonat,
Diaryliodoniumtetrakis-(pentafluorophenyl)-borat wie
Diphenyliodoniumtetrakis-(pentafluorophenyl)-borat,
(4-n-Disiloxyphenyl)-phenyliodoniumhexafluoroantimonat,
[4-(2-Hydroxy-n-tetradesiloxy)-phenyl]-phenyliodoniumhexafluoroantimonat,
[4-(2-Hydroxy-n-tetradesiloxy)-phenyl]-phenyliodoniumtrifluorosulfonat,
[4-(2-Hydroxy-n-tetradesiloxy)-phenyl]-phenyliodoniumhexafluorophosphat,
[4-(2-Hydroxy-n-tetradesiloxy)-phenyl]-phenyliodoniumtetrakis-(pentafluorophenyl)-borat,
Bis-(4-tert-butylphenyl)-iodoniumhexafluoroantimonat,
Bis-(4-tert-butylphenyl)-iodoniumhexafluorophosphat,
Bis-(4-tert-butylphenyl)-iodoniumtrifluorosulfonat,
Bis-(4-tert-butylphenyl)-iodoniumtetrafluoroborat,
Bis-(dodecylphenyl)-iodoniumhexafluoroantimonat,
Bis-(dodecylphenyl)-iodoniumtetrafluoroborat,
Bis-(dodecylphenyl)-iodoniumhexafluorophosphat,
Bis-(dodecylphenyl)-iodoniumtrifluoromethylsulfonat,
Di-(dodecylphenyl)-iodoniumhexafluoroantimonat,
Di-(dodecylphenyl)-iodoniumtriflat,
Diphenyliodoniumbisulfat,
4,4'-Dichlorodiphenyliodoniumbisulfat,
4,4'-Dibromodiphenyliodoniumbisulfat,
3,3'-Dinitrodiphenyliodoniumbisulfat,
4,4'-Dimethyldiphenyliodoniumbisulfat,
4,4'-Bis-succinimidodiphenyliodoniumbisulfat,
3-Nitrodiphenyliodoniumbisulfat,
4,4'-Dimethoxydiphenyliodoniumbisulfat,
Bis-(dodecylphenyl)-iodoniumtetrakis-(pentafluorophenyl)-borat,
(4-Octyloxyphenyl)-phenyliodoniumtetrakis-(3,5-bis-trifluoromethylphenyl)-borat und (Tolylcumyl)-iodoniumtetrakis-(pentafluorophenyl)-borat,
   und
Ferrocenium-Salze (siehe zum Beispiel EP 542 716 B1) wie
η5-(2,4-cyclopentadien-1-yl)-[(1,2,3,4,5,6,9)-(1-methylethyl)-benzol]-eisen.

Beispiele für kommerzialisierte Photoinitiatoren sind Cyra-cure UVI-6990, Cyracure UVI-6992, Cyracure UVI-6974 und Cy-racure UVI-6976 der Firma Union Carbide, Optomer SP-55, Op-tomer SP-150, Optomer SP-151, Optomer SP-170 und Optomer SP-172 der Firma Adeka, San-Aid SI-45L, San-Aid SI-60L, San-Aid SI-80L, San-Aid SI-100L, San-Aid SI-110L, San-Aid SI-150L und San-Aid SI-180L der Firma Sanshin Chemical, SarCat CD-1010, SarCat CD-1011 und SarCat CD-1012 der Firma Sartomer, Degacure K185 der Firma Degussa, Rhodorsil Photoinitiator 2074 der Firma Rhodia, CI-2481, CI-2624, CI-2639, CI-2064, CI-2734, CI-2855, CI-2823 und CI-2758 der Firma Nippon Soda, Omnicat 320, Omnicat 430, Omnicat 432, Omnicat 440, Omnicat 445, Omnicat 550, Omnicat 550 BL und Omnicat 650 der Firma IGM Resins, Daicat II der Firma Daicel, UVAC 1591 der Firma Daicel-Cytec, FFC 509 der Firma 3M, BBI-102, BBI-103, BBI-105, BBI-106, BBI-109, BBI-110, BBI-201, BBI, 301, BI-105, DPI-105, DPI-106, DPI-109, DPI-201, DTS-102, DTS-103, DTS-105, NDS-103, NDS-105, NDS-155, NDS-159, NDS-165, TPS-102, TPS-103, TPS-105, TPS-106, TPS-109, TPS-1000, MDS-103, MDS-105, MDS-109, MDS-205, MPI-103,, MPI-105, MPI-106, MPI-109, DS-100, DS-101, MBZ-101, MBZ-201, MBZ-301, NAI-100, NAI-101, NAI-105, NAI-106, NAI-109, NAI-1002, NAI-1003, NAI-1004, NB-101, NB-201, NDI-101, NDI-105, NDI-106, NDI-109, PAI-01, PAI-101, PAI-106, PAI-1001, PI-105, PI-106, PI-109, PYR-100, SI-101, SI-105, SI-106 und SI-109 der Firma Midori Kagaku, Kayacure PCI-204, Kayacure PCI-205, Kayacure PCI-615, Kaya-cure PCI-625, Kayarad 220 und Kayarad 620, PCI-061T, PCI-062T, PCI-020T, PCI-022T der Firma Nippon Kayaku, TS-01 und TS-91 der Firma Sanwa Chemical, Deuteron UV 1240 der Firma Deuteron, Tego Photocompound 1465N der Firma Evonik, UV 9380 C-D1 der Firma GE Bayer Silicones, FX 512 der Firma Cytec, Silicolease UV Cata 211 der Firma Bluestar Silicones und Ir-gacure 250, Irgacure 261, Irgacure 270, Irgacure PAG 103, Irgacure PAG 121, Irgacure PAG 203, Irgacure PAG 290, Irga-cure CGI 725, Irgacure CGI 1380, Irgacure CGI 1907 und Irga-cure GSID 26-1 der Firma BASF.

Dem Fachmann sind weitere Systeme bekannt, die ebenfalls er-findungsgemäß einsetzbar sind. Photoinitiatoren werden unkombiniert oder als Kombination von zwei oder mehreren Photoinitiatoren eingesetzt.

Vorteilhaft sind Photoinitiatoren, die Absorption bei kleiner 350 nm und vorteilhaft bei größer 250 nm aufweisen. Initiatoren, die oberhalb 350 nm absorbieren, beispielsweise im Bereich violetten Lichts, sind ebenfalls einsetzbar. Sulfonium-basierende Photoinitiatoren werden besonders bevorzugt eingesetzt, da sie eine vorteilhafte UV-Absorptionscharakteristik aufweisen.

Des Weiteren können Photosensitizer eingesetzt werden, die in einem Redox-Prozess den Photoinitiator reduzieren. In diesem Prozess wird der eigentliche Photoinitiator zersetzt, wobei reaktive Kationen gebildet werden, die eine kationische Polymerisation starten können. Diese Art der Reaktions-führung erlaubt die Initiation der kationischen Polymerisation bei höheren Wellenlängen. Beispiele für solche Photosensitizer sind Diphenolmethanon und Derivate, Acetophenon-derivate wie beispielsweise Irgacure 651, Anthracenderivate wie 2-Ethyl-9,10-Dimethoxy-Anthracen und 9-Hydroxymethyl-Anthracen, Phenylketonderivate wie 1-Hydroxycyclohexyl-phenylketon, 2-Hydroxy-2-methyl-1-phenyl-propan-1-one und 4-(2-Hydroxyethoxy)-phenyl-(2-hydroxy-2-methylpropyl)-keton (Irgacure 184, Darocur 1173, Irgacure 2959) sowie Thioxan-thenonderivate wie 4-Isopropyl-9-thioxanthenon oder 1-chloro-4-propoxy-thioxanthenon.

Besonders bevorzugte Kombinationen aus Photoinitiator und Sensitizer berücksichtigen die unterschiedlichen Redoxpotentiale und Retardierungspotentiale von Zwischenprodukten wie es für Kombinationen aus Diaryliodonium basierten Photoinitiatoren mit Acetophenonsensitizern der Fall ist und in Bulut U., Crivello J. V., J. Polym. Sci. 2005, 43, Seiten 3205 bis 3220, beschrieben ist.

Das erfindungsgemäße Klebeband umfasst Matrixpolymer, in der die härtbare Zusammensetzung, die zumindest ein Epoxidharz sowie zumindest ein Härtungsreagenz für das Epoxidharz um-fasst, enthalten ist. Derartige Klebebänder umfassen somit einen Klebefilm, der grundsätzlich ausgebildet ist aus einem Matrixpolymer mit der darin eingebetteten härtbaren Zusammensetzung, die insbesondere als Reaktivklebstoff dient. Das Matrixpolymer bildet dabei einen selbsttragenden dreidimensionalen Film aus (wobei die räumliche Ausdehnung in Dicken-richtung des Films in der Regel sehr viel kleiner ist als die räumlichen Ausdehnungen in Längs- und Querrichtung, also als in den zwei Raumrichtungen der Flächenausdehnung des Films; zur Bedeutung des Begriffs "Film" siehe hierzu auch weiter unten). In diesem Matrixpolymer ist die härtbare Zusammensetzung, insbesondere der Reaktivklebstoff, bevorzugt im Wesentlichen räumlich gleichverteilt (homogen), insbesondere so dass der Reaktivklebstoff - der ohne die Matrix gegebenenfalls nicht selbsttragend wäre - im erfindungsgemäßen Klebefilm im Wesentlichen die gleiche (makroskopische) Raumverteilung einnimmt wie das Matrixpolymer.

Aufgabe des Matrixpolymers ist es, ein inertes Grundgerüst für die reaktiven Monomere und/oder Reaktivharze zu bilden, so dass diese in einem Film oder einer Folie eingelagert sind. Somit können auch ansonsten flüssige Systeme in Filmform angeboten werden. Auf diese Art und Weise wird eine einfachere Handhabung gewährleistet. Die der Matrix zugrunde liegenden Polymere sind dabei durch hinreichende Wechselwirkungen der Makromoleküle untereinander in der Lage, einen selbsttragenden Film ausbilden zu können, beispielweise - ohne sich hierdurch im Erfindungsgedanken unnötig beschränken zu wollen - durch Ausbildung eines Netzwerks aufgrund physikalischer und/oder chemischer Vernetzung.

Inert bedeutet in diesem Zusammenhang, dass die reaktiven Monomere und/oder Reaktivharze unter geeignet gewählten Bedingungen (zum Beispiel bei ausreichend geringen Temperaturen) im Wesentlichen nicht mit der polymeren Filmbildner-Matrix reagieren.

Als geeignete Filmbildner-Matrices zur Verwendung in der vorliegenden Erfindung werden vorzugsweise ein thermoplastisches Homopolymer oder ein thermoplastisches Copolymer eingesetzt, oder ein Blend aus thermoplastischen Homopolymeren oder aus thermoplastischen Copolymeren oder aus einem oder mehreren thermoplastischen Homopolymeren mit einem oder mehreren thermoplastischen Copolymeren. In einer bevorzugten Vorgehensweise werden ganz oder teilweise semikristalline thermoplastische Polymere eingesetzt.

Als thermoplastische Polymere können grundsätzlich beispielsweise Polyester, Copolyester, Polyamide, Poly(ethylen-co-vinylacetat), Copolyamide, Polyacrylsäureester, Acrylsäu-reester-Copolymere, Polymethacrylsäureester, Methacrylsäu-reester-Copolymere, thermoplastische Polyurethane sowie chemisch oder physikalisch vernetzte Stoffe der zuvor genannten Verbindungen gewählt werden. Die genannten Polymere können jeweils als einzig eingesetztes Polymer oder als Komponente eines Blends verwendet werden.

Gemäß einer bevorzugten Ausführungsform umfassen die Polymere Copolymer-Einheiten. Besonders bevorzugt unter den Styrolcopolymeren sind Styrol-Kautschuk-Blockcopolymere wie Styrol-Butadien-Styrol-Blockcopolymere, Styrol-Isopren-Styrol-Blockcopolymere sowie Styrol-Ethylen/Butylen-Styrol-Blockcopolymere (SEBS) und Styrol-Ethylen/Propylen-Styrol-Blockcopolymere (SEPS). Besonders bevorzugt unter den Acrylaten und Methacrylaten sind Acrylat- und/oder Methacrylat-Copolymere beispielsweise Glycidylacrylat enthaltende Acrylat- und/oder Methacrylat-Copolymere. Bevorzugte Ethyl-en-Vinylacetat-Copolymere besitzen einen Vinylacetat-Anteil zwischen 40% und 90%, wie 50% bis 70%. Bevorzugt weisen geeignete Ethylen-Vinylacetat-Copolymere eine Mooney-Viskosität (ML (1+4)/100 °C) zwischen 15 und 45, bevorzugt zwischen 20 und 30 auf. Diese sind beispielsweise unter dem Handelsnamen Levapren^{®} von der Firma Lanxess erhältlich. Besonders bevorzugt wird Levapren^{®} verwendet, das einen Vinylacetat-Anteil von etwa 60 Gew.-% und eine Mooney-Viskosität (ML (1+4)/100 °C) von 27±4 aufweist. Bevorzugte Styrolcopolymere weisen einen Styrolgehalt zwischen 15 Gew.-% und 50 Gew.-%, bevorzugt 25 Gew.-% bis 40 Gew.-% auf. Bevorzugt weisen geeignete Styrolcopolymeren eine Brookfield-Viskosität (10 % w) von 250 bis 2500 auf. Unter den Styrolcopolymeren sind SEBS-Blockcopolymere besonders bevorzugt. Ein solches ist beispielsweise unter dem Handelsnamen Kraton^{®} G1651, mit einem Styrolgehalt von etwa 30% und einer Brookfield-Viskosität (10 % w) von 1800 erhältlich. Die genannten Polymere können jeweils als einzig ein-gesetztes Polymer oder als Komponente eines Blends verwendet werden.

Die Klebemasse kann nach dem Aushärten elastisch sein, um eine dauerhafte, gegen Schwingungen und Verwindungen unempfindliche Ummantelung sicherzustellen.

In einer weiteren vorteilhaften Ausführungsform kommt als härtbare Klebemasse ein thermisch härtbarer, schmelzbarer Klebstoff, zum Einsatz, umfassend ein epoxidfunktionalisiertes Acrylnitril/Butadien-Copolymer mit durchschnittlich mehr als 1,5 Epoxidgruppen pro Molekül und das gemahlene Reaktionsprodukt aus Phthalsäureanhydrid und Diethylentriamin, wie es in der DE 10 2019 211 178 A1 beschrieben ist.

Vorzugsweise weist die Klebemasse eine Klebkraft auf Stahl gemäß der angegebenen Messmethode von 1,5 N/cm bis 25 N/cm auf. Die Abrollkraft gemäß der angegebenen Messmethode des erfindungsgemäßen Klebebandes liegt bevorzugt im Bereich von 1,0 N/cm bis 12 N/cm

Vorteilhaft liegt die Gesamtdicke der aufgebrachten Klebemasse zwischen 20 µm und 500 µm, weiter vorteilhaft zwischen 30 µm und 250 µm, besonders vorteilhaft zwischen 40 µm und 100 µm.

Der Masseauftrag der Klebemasse beträgt vorzugsweise zwischen 40 g/m² und 500 g/m².

Als Träger können alle bekannten Folien und textilen Träger wie Gestricke, Gelege, Bänder, Geflechte, Nadelflortextilien, Filze, Gewebe (umfassend Leinwand-, Köper und Atlasbindung), Gewirke (umfassend Kettenwirkware und Strickware) oder Vliese verwendet werden, wobei unter "Vlies" zumindest textile Flächengebilde gemäß EN 29092 (1988) sowie Nähwirkvliese und ähnliche Systeme zu verstehen sind. Besonders vorteilhaft ist ein Klebeband, bei dem als Träger ein Gewebe, ein Vlies oder ein Gewirke eingesetzt wird. Derartige Träger sind beispielsweise in der WO 2015/004190 A1 beschrieben, auf die hier vollständig Bezug genommen wird.

Zu den Nähwirkstoffen gehören auch Fadenlagen-Nähwirkstoffe, also textile Flächengebilde mit einer oder mehreren übereinander gelegten Fadenlage(n) als Grundmaterial, die durch Maschenbildung eingebundener Wirkfäden verfestigt sind, zum Beispiel Florofol, Polfaden-Nähwirkstoffe, also textile Flächengebilde, bei denen Wirkfäden als Pol geformt in ein Grundmaterial mittels Maschenbildung eingebunden sind, zum Beispiel Malipol und Schusspol-Nähwirkstoffe, also textile Flächengebilde, bei denen als Pol geformte unvermaschte Fäden durch Wirkfäden mittels Maschenbildung an ein Grundmaterial angebunden sind, zum Beispiel Schusspol.

Weiterhin bevorzugt sind auch Vlieswirkstoffe, also textile Flächengebilde, die ohne Verwendung von Fäden durch Bildung von Fasermaschen aus vorgelegtem Faservlies hergestellt sind. Dazu zählen Faser-Vlieswirkstoffe, also textile Flächengebilde aus Faservlies mit einer verfestigenden Fasermaschenseite und einer Seite mit horizontal zur Fasermaschenschicht angeordneten Fasern, wobei Fasern aus dem Faservlies zu Fasermaschen geformt werden, zum Beispiel Malivlies, Polfaser-Vlieswirkstoffe, also textile Flächengebilde aus Faservlies mit oder ohne Verwendung eines Grundmaterials, die aus einer Fasermaschenseite sowie einer Polfaserseite mit nahezu senkrecht zur Fasermaschenschicht angeordneten Fasern bestehen, zum Beispiel Voltex, Kunit oder Maliknit, Maschen-Vlieswirkstoffe, also textile Flächengebilde aus einem Polfaser-Vlieswirkstoff, aus dessen Polfasern eine zweite Fasermaschenschicht gebildet ist, zum Beispiel Multiknit oder Optiknit.

Die obigen Definitionen sind der DIN 61211:2005-05 entnommen.

Des Weiteren können Abstandsgewebe und -gewirke mit Kaschierung verwendet werden. Derartige Abstandsgewebe werden in der EP 0 071 212 B1 offenbart. Abstandsgewebe sind mattenförmige Schichtkörper mit einer Deckschicht aus einem Faser- oder Filamentvlies, einer Unterlagsschicht und zwischen diesen Schichten vorhandene einzelne oder Büschel von Haltefasern, die über die Fläche des Schichtkörpers verteilt durch die Partikelschicht hindurchgenadelt sind und die Deckschicht und die Unterlagsschicht untereinander verbinden.

Als Vliesstoffe kommen besonders verfestigte Stapelfaservliese, jedoch auch Filament-, Meltblown sowie Spinnvliese in Frage, die meist zusätzlich zu verfestigen sind. Als mögliche Verfestigungsmethoden sind für Vliese die mechanische, die thermische sowie die chemische Verfestigung bekannt. Besonders vorteilhaft haben sich Vliese erwiesen, die insbesondere durch ein Übernähen mit separaten Fäden oder durch Vermaschen verfestigt sind. Derartige verfestigte Vliese werden beispielsweise auf Nähwirkmaschinen des Typs "Malimo" der Firma Karl Mayer, ehemals Malimo, hergestellt und sind unter anderem bei der Firma Hoftex Group AG beziehbar.

Als Träger kann weiterhin ein Vlies vom Typ Kunit oder Multiknit verwendet werden. Ein Kunitvlies ist dadurch gekennzeichnet, dass es aus der Verarbeitung eines längsorientierten Faservlieses zu einem Flächengebilde hervorgeht, das auf einer Seite Maschen und auf der anderen Maschenstege oder Polfaser-Falten aufweist, aber weder Fäden noch vorgefertigte Flächengebilde besitzt. Auch ein derartiges Vlies wird beispielsweise auf Nähwirkmaschinen des Typs "Malimo" der Firma Karl Mayer schon seit längerer Zeit hergestellt. Derartige Vlies-Nähwirkstoffe sind unter dem Namen "Maliwatt" bekannt.

Ein Multiknitvlies ist gegenüber dem Kunitvlies dadurch gekennzeichnet, dass das Vlies durch das beidseitige Durchstechen mit Nadeln sowohl auf der Ober- als auch auf der Unterseite eine Verfestigung erfährt. Als Ausgangsprodukt für ein Multiknit dienen in der Regel ein beziehungsweise zwei nach dem Kunit-Verfahren hergestellte einseitig vermaschte Polfaser-Vlieswirkstoffe. Im Endprodukt sind beide Vliesstoffoberseiten durch Faservermaschungen zu einer geschlossenen Oberfläche geformt und durch nahezu senkrecht stehende Fasern miteinander verbunden. Die zusätzliche Einbringbarkeit weiterer durchstechbarer Flächengebilde und/oder streufähiger Medien ist gegeben.

Schließlich sind auch Nähvliese als Vorprodukt geeignet, einen erfindungsgemäßen Träger und ein erfindungsgemäßes Klebeband zu bilden. Ein Nähvlies wird aus einem Vliesmaterial mit einer Vielzahl parallel zueinander verlaufender Nähte gebildet. Diese Nähte entstehen durch das Einnähen oder Nähwirken von durchgehenden textilen Fäden. Für diesen Typ Vlies sind Nähwirkmaschinen des Typs "Malimo" der Firma Karl Mayer bekannt.

Besonders geeignet sind auch Nadelvliese. Beim Nadelvlies wird ein Faserflor zu einem Flächengebilde mit Hilfe von mit Widerhaken versehenen Nadeln. Durch wechselndes Einstechen und Ausziehen der Nadeln wird das Material auf einem Nadelbalken verfestigt, wobei sich die Einzelfasern zu einem festen Flächengebilde verschlingen.

Weiterhin besonders vorteilhaft ist ein Stapelfaservlies, das im ersten Schritt durch mechanische Bearbeitung vorverfestigt wird oder das ein Nassvlies ist, das hydrodynamisch gelegt wurde, wobei zwischen 2 Gew.-% und 50 Gew.-% der Fasern des Vlieses Schmelzfasern sind, insbesondere zwischen 5 Gew.-% und 40 Gew.-% der Fasern des Vlieses. Ein derartiges Vlies ist dadurch gekennzeichnet, dass die Fasern nass gelegt werden oder zum Beispiel ein Stapelfaservlies durch die Bildung von Maschen aus Fasern des Vlieses durch Nadelung, Vernähung, Luft und/oder Wasserstrahlbearbeitung vorverfestigt wird. In einem zweiten Schritt erfolgt die Thermofixierung, wobei die Festigkeit des Vlieses durch das Auf- oder Anschmelzen der Schmelzfasern nochmals erhöht wird.

Vorteilhaft und zumindest bereichsweise weist der Träger eine ein- oder beidseitig glattgeschliffene Oberfläche auf, vorzugsweise jeweils eine vollflächig glattgeschliffene Oberfläche. Die glattgeschliffene Oberfläche mag gechintzt sein, wie es beispielsweise in der EP 1 448 744 A1 erläutert wird. Auf diese Weise wird die Abweisbarkeit von Schmutz verbessert.

Als Ausgangsmaterialien für den Träger sind insbesondere (Chemie-)Fasern (Stapelfaser oder Endlosfilament) aus synthetischen Polymeren, auch synthetische Fasern genannt, aus Polyester wie Polyethylenterephthalat, Polyamid, Polyimid, Aramid, Polyolefin, Polyacrylnitril oder Glas, (Chemie)Fasern aus natürlichen Polymeren wie zellulosische Fasern (Viskose, Modal, Lyocell, Cupro, Acetat, Triacetat, Cellulon), wie Gummifasern, wie Pflanzeneiweißfasern und/oder wie Tiereiweißfasern und/oder natürliche Fasern aus Baumwolle, Sisal, Flachs, Seide, Hanf, Leinen, Kokos oder Wolle vorgesehen. Die vorliegende Erfindung ist aber nicht auf die genannten Materialien beschränkt, sondern es können, für den Fachmann erkenntlich ohne erfinderisch tätig werden zu müssen, eine Vielzahl weiterer Fasern zur Herstellung des Vlieses eingesetzt werden.

Des Weiteren sind Garne, gefertigt aus den angegebenen Rohstoffen, ebenfalls geeignet. Bei Geweben oder Gelegen können einzelne Fäden aus einem Mischgarn hergestellt werden, also synthetische und natürliche Bestandteile aufweisen. In der Regel sind die Kettfäden und die Schussfäden jedoch jeweils sortenrein ausgebildet.

Bevorzugt wird als Material für den Träger Polyester verwendet, aufgrund der hervorragenden Alterungsbeständigkeit und der hervorragenden Medienbeständigkeit gegenüber Chemikalien und Betriebsmitteln wie Öl, Benzin, Frostschutzmittel u. ä. Darüber hinaus hat Polyester den Vorteil, dass sie zu einem sehr abriebfesten und temperaturbeständigen Träger führen, was für den speziellen Einsatzzweck zur Bündelung von Kabeln in Automobilen und beispielsweise im Motorraum von besonderer Wichtigkeit ist.

Vorteilhaft liegt das Flächengewicht des Trägers zwischen 30 g/m² und 300 g/m² weiter vorteilhaft zwischen 50 g/m² und 200 g/m², besonders vorteilhaft zwischen 50 g/m² und 150 g/m², ganz besonders vorteilhaft zwischen 70 g/m² und 130 g/m².

Gemäß einer besonders vorteilhaften Ausführungsform der Erfindung werden als Träger ein Gewebe oder ein Vlies aus Polyester eingesetzt, die ein Flächengewicht zwischen 50 g/m² und 150 g/m² aufweisen.

Vorzugsweise ist der Träger ein Trägerverbund aus einem textilen Träger und einer Folie, insbesondere aus einem Vlies und einer Folie. Besonders bevorzugte Folienmaterialien sind dabei Polyolefine, insbesondere Polypropylen und Polyethylen. Die Klebemasse ist regelmäßig auf den textilen Träger aufgetragen. Die Klebemasse dringt in diesen textilen Träger ein und durchtränkt ihn. Die Folienschicht, auf der der Klebemasse abgewandten Seite, wirkt als Barriereschicht und sorgt dafür, dass die Klebemasse auf einer Seite des Trägers verbleibt.

Die Herstellung eines erfindungsgemäßen Klebebandes erfolgt vorzugsweise wie nachstehend beschrieben:
Ein Trägerverbund aus textilem Gewebe, vorzugsweise Vlies, und polyolefinischer Folie wird mittels Mayer-Bar Beschichtung auf der polyolefinischen Folienschicht mit einer Carbamatlösung (zum Beispiel 0,5 Gew.-% Carbamat in Toluol) beschichtet, so dass ein Carbamatauftrag von ca. 0,05 g/m² resultiert. Der beschichtete Träger wird im Trockenkanal oder im Umluftofen mit Temperaturen zwischen 80 und 110 °C für wenige Minuten getrocknet und am Ende aufgewickelt.

Der mit Carbamat beschichtete Träger kann anschließend mit einer Lösungsmittel- oder Hotmelt-Klebmasse beschichtet werden.

Für die Beschichtung mit einer Lösungsmittelklebmasse gilt gemäß einer bevorzugten Ausführungsform allgemein folgende Zusammensetzung:

| | |
|---|---|
| 15 bis 50 Gew.-% | Matrix |
| 49,9 bis 82 Gew.-% | Epoxidharz |
| 0,1 bis 3 Gew.-% | Photoinitiator |

Die Matrix kann auf verschiedenen Basen aufbauen, solange Epoxidfunktionen enthalten sind.

Die Klebmasse wird mittels Rakel auf der Vliesseite des Trägerverbunds mit einem Flächengewicht zwischen 40 g/m² und 500 g/m², zum Beispiel einem Flächengewicht von 250 g/m² beschichtet und im Trockenkanal bei Temperaturen zwischen 80 und 110 °C getrocknet. Das beschichtete Material wird am Ende des Trockenkanals aufgewickelt.

Das fertig beschichtete Material wird vorzugsweise in eine Breite von 20±2 mm (jede andere Breite ist ebenfalls denkbar) geschnitten und bei Anwendung zur Umwicklung von langgestrecktem Gut spiralförmig mit einer Überlappung von 50 % um das langgestreckte Gut - wie ein Kabelbündel - gewickelt.

Das fertig beschichtete Material kann mit einem Liner eingedeckt sein.

Gegenstand der vorliegenden Erfindung ist auch ein Verfahren zum Ummanteln von langgestrecktem Gut wie insbesondere Leitungen oder Kabelsätzen, wobei ein wie zuvor beschriebenes Klebeband in einer Schraubenlinie um das langgestreckte Gut geführt wird oder das langgestreckte Gut in axialer Richtung von dem Klebeband umhüllt wird, das langgestreckte Gut mitsamt dem umhüllenden Klebeband in die gewünschte Anordnung, insbesondere in den Kabelsatzplan gebracht wird, das langgestreckte Gut in dieser Anordnung gehalten wird, die aushärtbare Klebemasse durch die Zufuhr von Wärme, zum Beispiel durch einen Heißluftofen oder Heißluftfön, zum Aushärten gebracht sowie die Releasewirkung der Carbamatschicht deaktiviert wird. Es ist auch möglich, dass die aushärtbare Klebemasse auf anderem Weg, zum Beispiel durch Bestrahlung, insbesondere mit UV-Strahlung aktiviert wird. Zur Deaktivierung der Releasewirkung der Carbamatschicht ist dann zusätzlich der Eintrag von Wärmeenergie erforderlich.

In einem alternativen Verfahren zum Ummanteln von langgestrecktem Gut wie insbesondere Leitungen oder Kabelsätzen unter Verwendung des erfindungsgemäßen Klebebandes wird die aushärtbare Klebemasse zunächst aktiviert. Das Klebeband wird unmittelbar anschließend in einer Schraubenlinie um das langgestreckte Gut geführt oder das langgestreckte Gut wird in axialer Richtung von dem Klebeband umhüllt, das langgestreckte Gut daraufhin mitsamt dem umhüllenden Klebeband in die gewünschte Anordnung, insbesondere in den Kabelsatzplan gebracht und in dieser Anordnung gehalten, während die aushärtbare Klebemasse aushärtet. Im Anschluss erfolgt dann die Deaktivierung der Releasewirkung, denn diese kann erst erfolgen, wenn das Klebeband an seiner endgültigen Position appliziert ist. Bevorzugt erfolgen die Prozesse der Aushärtung der Klebemasse und die Deaktivierung der Releasewirkung in einem Schritt, um eine möglichst geringe Taktzeit beim Anwender einhalten zu können.

Das Klebeband wird in der ersten Alternative in einer schraubenförmigen Bewegung um das langgestreckte Gut geführt. Es ergibt sich die Form einer Helix (auch Schraube, Schraubenlinie, zylindrische Spirale oder Wendel genannt; Helix ist eine Kurve, die sich mit konstanter Steigung um den Mantel eines Zylinders windet).

Das Band wird vorzugsweise spiralförmig mit einer Überlappung von 30 % bis 70 %, bevorzugter 40 bis 50 %, insbesondere etwa 50 % um das langgestreckte Gut umwickelt.

In der zweiten Alternative wird das langgestreckte Gut in axialer Richtung von dem Klebeband umhüllt. Die Umwicklung eines Kabelbaums mit dem beschriebenen Klebeband erfolgt dabei nicht - wie üblich - schraubenlinienförmig, sondern derart, dass beim Umwickeln eine Längsachse des Bandes im Wesentlichen parallel zur Verlaufsrichtung des Kabelbaums ausgerichtet ist. Im Querschnitt gesehen liegt das Klebeband dabei in Form einer archimedischen Spirale um den Kabelbaum. Diese Art der Wicklung wird auch "Einschlagen des Kabelbaums" genannt (der Fachwelt auch als "Zigarrenwicklung" bekannt).

Schließlich bezieht sich die vorliegende Erfindung auch auf einen mit dem erfindungsgemäßen, gehärteten Klebeband ummantelten Kabelstrang und auf einen nach dem erfindungsmäßen Verfahren hergestellten Kabelstrang.

Gemäß einer Ausführungsform der Erfindung handelt es sich bei dem langgestreckten Gut um einen Kabelstrang, der ein Bündel aus mehreren Kabeln, wie 3 bis 1000 Kabeln, bevorzugt 10 bis 500 Kabeln, insbesondere zwischen 50 und 300 Kabeln umfasst.

Im Folgenden soll das Klebeband anhand mehrerer Figuren näher erläutert werden, ohne damit eine wie auch immer geartete Einschränkung hervorrufen zu wollen.

Es zeigen
- Figur 1: das Klebeband im seitlichen Schnitt,
- Figur 2: einen Ausschnitt eines Kabelbaums, der sich aus einer Bündelung von einzelnen Kabeln zusammensetzt und der mit dem erfindungsgemäßen Klebeband ummantelt ist, und
- Figur 3: eine vorteilhafte Anwendung des Klebebands.

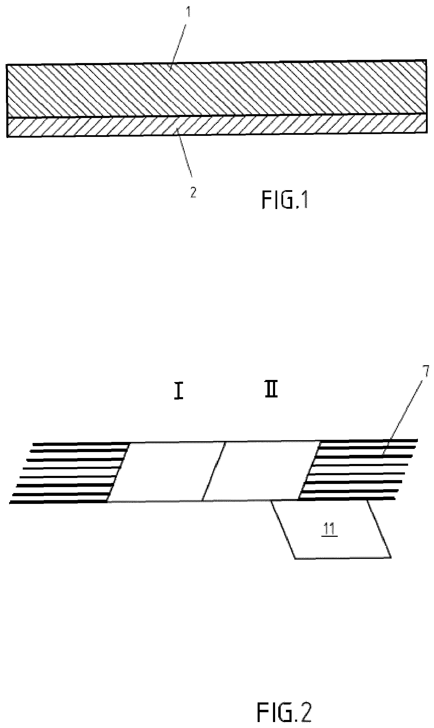

In der Figur 1 ist im Schnitt in Querrichtung (Querschnitt) das Klebeband gezeigt, das aus einem Gewebeträger 1 besteht, auf den einseitig eine Schicht einer selbstklebenden Beschichtung 2 auf Basis einer Acrylatdispersion aufgebracht ist.

Die Klebemasse ist zu 20 % in den Träger eingesunken, was eine optimale Verankerung bewirkt und gleichzeitig die Handeinreißbarkeit des Trägers verbessert.

In der Figur 2 ist ein Ausschnitt eines Kabelbaums gezeigt, der sich aus einer Bündelung von einzelnen Kabeln 7 zusammensetzt und der mit dem erfindungsgemäßen Klebeband 11 ummantelt ist. Das Klebeband wird in einer schraubenlinienförmigen Bewegung um den Kabelbaum geführt.

Der gezeigte Ausschnitt des Kabelbaums zeigt zwei Wicklungen I und II des Klebebands. Nach links hin würden sich weitere Wicklungen erstrecken, diese sind hier nicht dargestellt.

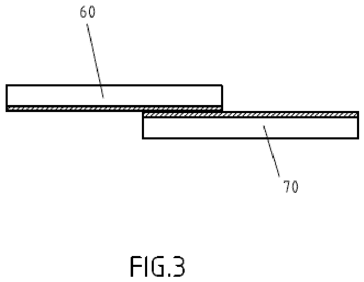

In einer weiteren Ausführungsform für eine Ummantelung werden zwei mit einer Klebemasse ausgerüstete erfindungsgemäße Bänder 60, 70 mit ihren Klebemassen versetzt (bevorzugt um jeweils 50 %) aufeinander laminiert, so dass sich ein Produkt ergibt, wie es in Figur 3 dargestellt ist.

### Beispiele:

### Messmethoden:

### Bestimmung der Abrollkraft

Die Klebebandrollen werden auf einer Abwickelvorrichtung befestigt und mit einer Geschwindigkeit von 30 m/min abgezogen. Die hierzu erforderliche Kraft wird gemessen. Der Mittelwert aus allen Messpunkten wird auf die Klebebandbreite bezogen und in N/cm angegeben.

### Bestimmung der Klebkraft

Zur Messung der Klebkräfte werden 19 mm breite Prüfstreifen blasenfrei auf eine fein geschliffene (Schmirgelpapier mit FEPA-Körnung 240) Stahlplatte aus rostfreiem Stahl geklebt und mit einer gummiumwickelten 2-kg-Rolle mit einer Geschwindigkeit von 10 m/min angedrückt. Die Stahlplatte und das überstehende Ende des Klebebandes werden dann in der Weise in die Enden einer Zugprüfmaschine gespannt, dass ein Abzugswinkel von 180° entsteht. Das Klebeband wird mit einer Geschwindigkeit von 300 mm/min von der Stahlplatte abgezogen. Die Angabe der Klebkraft erfolgt in N/cm.

### Biegeprüfung zur Ermittlung der Steifigkeit (3-Punkt-Biegefestigkeit)

Ein Prüfmuster, bestehend aus 250 Einzelleitungen mit einem Leitungsquerschnitt von 0,35 mm², wird mithilfe eines 9 mm breiten Klebebandes (tesa 51618) zu einem Musterleitungssatz gebündelt, so dass der Musterleitungssatz einen Durchmesser von 23±5 mm und eine Länge von 300±50 mm aufwies. Dieser Musterleitungssatz wird mit dem versteifenden Material schraubenlinienförmig umwickelt, wobei ein Überlapp von 50 % gewährleistet wird. Anschließend wird das versteifende Material mit der entsprechenden Aushärtmethode behandelt, hier Wärme.

Der gehärtete Musterleitungssatz wird einer Biegeprüfung unterzogen, um den Einfluss des versteifenden Materials auf die Steifigkeit zu bestimmen. Die Biegeprüfung wird an einer Zugprüfmaschine vorgenommen. Dafür wird der Musterleitungssatz auf zwei Backen mit einem Abstand von 70 mm gelegt und mittig mit einer Druckfinne um einen Weg von 30 mm eingedrückt und belastet. Die für die Verformung des Messwegs nötige Kraft wird von einer Zugprüfmaschine in Newton aufgezeichnet. Die Prüfgeschwindigkeit beträgt 100 mm/min, sowohl bei der Belastung als auch bei der Entlastung des Musterleitungssatzes. Die Prüfung wird an drei verschiedenen Stellen des Leitungssatzes (Anfang, Mitte und Ende) durchgeführt. Die Biegekraft resultiert aus dem Mittelwert der drei Einzelmessungen und wird in drei Kategorien wie folgt bewertet:

### Bewertungskategorien 3-Punkt Biegeversuch:

+ gut geeignet für die Anwendung
   (> 20 bis 100 N)
O eingeschränkt geeignet für die Anwendung
   (10 bis 20 N und >100 bis 150 N)
- nicht geeignet für die Anwendung
   (< 10 und > 150 N)

### Beispiel - Herstellung eines Klebebands

Ein Trägerverbund aus Vlies und polyolefinischer Folie (RKW Type 21002 mit 36 g/m² Vlies und 30 g/m² Polypropylen) wurde mittels Mayer-Bar Beschichtung auf der polyolefinischen Folienschicht mit einer Carbamatlösung (0,5 Gew.-% Carbamat, Release KB 100 der Firma Ichemco srl, Cuggiono, Italien) beschichtet, so dass ein Carbamatauftrag von ca. 0,05 g/m² (Nassfilmauftrag von ca. 6 µm) resultierte. Der beschichtete Träger wurde im Trockenkanal bei 110 °C für zwei Minuten getrocknet, so dass ein Masseauftrag von 30 mg/m² resultierte, und am Ende aufgewickelt.

Der mit Carbamat beschichtete Träger wurde anschließend mit einer Lösungsmittelklebmasse beschichtet. Die Lösungsmittelklebmasse hatte folgende Zusammensetzung:

| **Rohstoff** | **Chemische Charakterisierung** |
|---|---|
| Levamelt 700 | Ethylenvinylacetatcopolymer mit 70 Gew.-% Vinylacetat |
| Araldite GT 7072 | Unmodifiziertes Epoxidharz, basierend auf Bisphenol A mit schmaler Molekulargewichtsverteilung |
| Araldite GY 250 | Unmodifiziertes Epoxidharz, basierend auf Bisphenol A mit mittlerer Viskosität |
| Polycavit 3662 | Elastomer modifiziertes Epoxidharz |
| Irgacure 651 | 2,2-Dimethoxy-1,2-diphenylethan-1 -on |
| Deuteron 1242 | Compound auf der Basis von Bis (dodecylphenyl) iodoniumhexafluoroantimonat Kiegt in Lösung mit dem Reaktivverdünner C12/C14 Glycidether vor; Feststoffgehalt 50 % |

Für die Herstellung der Klebemasse gemäß Beispiel werden 19,4 Gew.-Teile Levamelt 700 (Arlanxeo), 49,9 Gew.-Teile Araldite GT7072 (Huntsman), 20,3 Gew.-Teile Araldite GY250 (Huntsman), 7,5 Gew.-Teile Polycavit 3662 (Struktol) (Epoxidharz), 1 Gew-Teil Irgacure 651 und 1,9 Gew-Teile Deuteron 1242 abgewogen und zusammen mit Butanon so abgemischt, dass ein Feststoffgehalt von 60 % entsteht.

Die Klebemasse wird mittels Rakel auf der Vliesseite des Trägerverbunds beschichtet und im Trockenkanal bei Temperaturen zwischen 80 und 110 °C getrocknet, so dass sich ein Flächengewicht von 250 g/m² ergibt. Das beschichtete Material wird am Ende des Trockenkanals aufgewickelt.

Das Klebeband wird dem 3-Punkt-Biegefestigkeitstest unterzogen. Vor der Aushärtung erfolgte eine Temperaturbeaufschlagung für jeweils 5 min mit den in der folgenden Tabelle angegeben Temperaturen:

| | | | | |
|---|---|---|---|---|
| Temperaturbeaufschlagung | 23 °C | 80 °C | 110 ° | 140 °C |
| 3-Punkt Biegefestigkeit [N] | 20 | 28 | 30 | 39 |

Man erkennt eine deutliche Abhängigkeit der Festigkeit von der Temperatur. Die 3-Punkt-Biegefestigkeit nimmt mit steigender Temperatur zu, wenn die Releaseschicht durch Temperatureinwirkung deaktiviert wurde. Je höher die Temperatur, umso besser konnte die Releaseschicht deaktiviert werden, was wiederum zu einer Erhöhung der Haftung führt, die sich in der verbesserten Biegefestigkeit bemerkbar macht.

## Patentansprüche

1. Klebeband zum Ummanteln von langgestrecktem Gut wie insbesondere Leitungen oder Kabelsätze, umfassend einen bandförmigen Träger, der auf mindestens einer Seite mit einer härtbaren Klebemasse versehen ist, **dadurch gekennzeichnet, dass** das Klebeband des Weiteren auf einer Seite des bandförmigen Trägers mit einer Releaseschicht aus Carbamat versehen ist.

2. Klebeband nach Anspruch 1, **dadurch gekennzeichnet, dass** das Klebeband auf einer Seite des bandförmigen Trägers mit einer härtbaren Klebemasse und auf der anderen Seite mit der Releaseschicht aus Carbamat versehen ist.

3. Klebeband nach Anspruch 1 oder 2, **dadurch gekennzeichnet, dass** die Trägerschicht einen gewebten Textilstoff oder einen Vliesstoff und eine Folie umfasst.

4. Klebeband nach einem der Ansprüche 1 bis 3, **dadurch gekennzeichnet, dass** die härtbare Klebemasse mittels Strahlungsenergie, Wärmeenergie, Feuchtigkeit oder Druck aktiviert wird.

5. Klebeband nach einem der Ansprüche 1 bis 4, **dadurch gekennzeichnet, dass** die Releasewirkung des Carbamats temperaturreversibel ist.

6. Klebeband nach einem der Ansprüche 1 bis 5, **dadurch gekennzeichnet, dass** das Carbamat ein Salz oder Ester der Carbamidsäure ist.

7. Klebeband nach einem der vorangehenden Ansprüche, **dadurch gekennzeichnet, dass** das Flächengewicht des textilen Trägers zwischen 30 g/m² und 300 g/m² liegt.

8. Klebeband nach einem der vorangehenden Ansprüche, **dadurch gekennzeichnet, dass** der Masseauftrag der Klebemasse zwischen 40 g/m² und 500 g/m² liegt.

9. Verfahren zum Ummanteln von langgestrecktem Gut wie insbesondere Leitungen oder Kabelsätzen, wobei ein Klebeband gemäß einem der vorangehenden Ansprüche in einer Schraubenlinie um das langgestreckte Gut geführt wird oder das langgestreckte Gut in axialer Richtung von dem Klebeband umhüllt wird, das langgestreckte Gut mitsamt dem umhüllenden Klebeband in die gewünschte Anordnung, insbesondere in den Kabelsatzplan gebracht wird, das langgestreckte Gut in dieser Anordnung gehalten und die aushärtbare Klebemasse zum Aushärten gebracht sowie die Releasewirkung der Carbamatschicht deaktiviert wird.

10. Verfahren zum Ummanteln von langgestrecktem Gut wie insbesondere Leitungen oder Kabelsätzen, wobei ein Klebeband gemäß einem der Ansprüche 1 bis 8 zunächst aktiviert wird und unmittelbar anschließend in einer Schraubenlinie um das langgestreckte Gut geführt oder das langgestreckte Gut in axialer Richtung von dem Klebeband umhüllt wird, das langgestreckte Gut daraufhin mitsamt dem umhüllenden Klebeband in die gewünschte Anordnung, insbesondere in den Kabelsatzplan gebracht und in dieser Anordnung gehalten wird, während die aushärtbare Klebemasse aushärtet.

11. Kabelstrang, der mit einem Klebeband gemäß einem der Ansprüche 1 bis 8 ummantelt ist oder nach einem Verfahren gemäß einem der Patentansprüche 9 bis 10 herstellbar ist.

12. Verwendung des Klebebandes nach einem der Ansprüche 1 bis 8 zum Ummanteln von langgestrecktem Gut wie insbesondere Leitungen oder Kabelsätze.
